# EUROPÄISCHE PATENTSCHRIFT

(11) **EP 3 823 847 B1**
(45) Veröffentlichungstag und Bekanntmachung des Hinweises auf die Patenterteilung: **17.04.2024**
(21) Anmeldenummer: 19742543.2
(22) Anmeldetag: 11.07.2019
(51) Int. Cl.: B60C 23/06, G01M 17/007, G01M 17/013, G07C 5/08

(54) **SENSORVORRICHTUNG UND VERFAHREN ZUM UNTERSUCHEN EINES BEFESTIGUNGSZUSTANDS ZUMINDEST EINES RADS EINES KRAFTFAHRZEUGS**
SENSOR DEVICE AND METHOD FOR EXAMINING THE SECURE STATE OF AT LEAST ONE WHEEL OF A MOTOR VEHICLE
DISPOSITIF CAPTEUR ET PROCÉDÉ D'EXAMEN DE L'ÉTAT DE MONTAGE D'AU MOINS UNE ROUE D'UN VÉHICULE AUTOMOBILE

(30) Priorität: 19.07.2018 DE 102018212026
(43) Veröffentlichungstag der Anmeldung: 26.05.2021
(73) Patentinhaber: Robert Bosch GmbH, 70442 Stuttgart (DE)
(72) Erfinder: SCHEUING, Jan, 74336 Brackenheim (DE); HOENIG, Anna, 71672 Marbach (DE); MARTIN, Uwe, 71706 Markgroeningen (DE); GRAUER, Thomas, 74348 Lauffen (DE)
(86) Internationale Anmeldenummer: PCT/EP2019/068748
(87) Internationale Veröffentlichungsnummer: WO 2020/016108

(56) Entgegenhaltungen:
- DE-A1-102013 211 697
- DE-T5-112016 002 232
- US-A1- 2008 243 327
- US-A1- 2010 274 607

## Beschreibung

Die Erfindung betrifft eine Sensorvorrichtung für ein Kraftfahrzeug. Ebenso betrifft die Erfindung ein Verfahren zum Untersuchen eines Befestigungszustands zumindest eines Rads eines Kraftfahrzeugs.

### Stand der Technik

In der DE 10 2013 211 697 A1 ist eine Sensoranordnung beschrieben, mittels welcher sich lösende Räder eines mit der Sensoranordnung bestückten Kraftfahrzeugs erkennbar sein sollen. Insbesondere soll für jedes der Räder des Kraftfahrzeugs ein mechanisches Spiel zwischen dem jeweiligen Rad und seiner zugeordneten Radnabe anhand eines Sensorsignals eines dem jeweiligen Rad zugeordneten Drehzahlsensors bestimmbar und auf eine Wahrscheinlichkeit eines Lösens des jeweiligen Rads von dem Kraftfahrzeug auswertbar sein.

Die US 2008/243327 A1 offenbart eine Kontrollsystem für ein Fahrzeug mit Fahrdynamiksensoren. Reifenüberwachungssystemsensoren an jedem Rad erzeugen Reifensignale umfassend Temperatur, Druck und Beschleunigungsdaten. Ein Steuergerät kommuniziert mit dem Reifenüberwachungssystem und wenigstens einem Fahrdynamiksensor und erzeugt einen Wert der eine Abnormalität anzeigt.

Die DE 11 2016 002 232 T5 befasst sich mit einer Vorrichtung zum Bestimmen eines Radbefestigungsstatus, durch die sich ein Radbefestigungsstatus während des Fahrens überwachen lässt. Die Vorrichtung weist eine Sensoreinheit (3) auf, die an einem Radbefestigungsteil anbringbar und davon lösbar ist, ein

### Einschubseite 1a

Informationsendgerät, das eine fahrzeuginterne Vorrichtung ist, oder ein tragbares Endgerät, und einen Server auf. Der Server weist ein erstes Informationsverarbeitungsmodul, das zum Bestimmen einer Unregelmäßigkeit eines Befestigungsstatus des Radbefestigungsteils durch Vergleichen der Messdaten mit gesammelten Daten, die unter der gleichen Bedingung in der Vergangenheit gemessen und gespeichert wurden, konfiguriert ist, auf.

Die US 2010/0274607 A1 beschreibt ein Verfahren zum Identifizieren von Standorten von Modulen einer Vorrichtung zur Überwachung von Rädern eines Fahrzeugs bereitgestellt. Die Sensormodule rotieren mit den Rädern im Betrieb. Die Module kommunizieren mit einer Verarbeitungsanordnung des Fahrzeugs. Die Module erfassen einen physikalischen Parameter der Räder und erzeugen entsprechende Sensorsignale für die Verarbeitungsanordnung.

### Offenbarung der Erfindung

Die Erfindung schafft eine Sensorvorrichtung für ein Kraftfahrzeug mit den Merkmalen des Anspruchs 1 und ein Verfahren zum Untersuchen eines Befestigungszustands zumindest eines Rads eines Kraftfahrzeugs mit den Merkmalen des Anspruchs 6.

### Vorteile der Erfindung

Die Erfindung schafft Möglichkeiten zur verlässlichen Erkennung zumindest eines sich lösenden Rads eines Kraftfahrzeugs anhand von charakteristischen Veränderungen in den für bestimmte Fahrsituationen festgelegten ersten Linienspektren und/oder ersten Varianzen im Gegensatz zu den für unterschiedliche Fahrsituationen festgelegten zweiten Linienspektren und/oder zweiten Varianzen. Wie unten genauer erläutert wird, ist ein Auftreten der charakteristischen Veränderungen in den bestimmten ersten Linienspektren und/oder ersten Varianzen als Reaktion auf ein Lösen mindestens eines Radbefestigungsmittels des jeweiligen Rads fahrsituationsabhängig, weshalb die ebenfalls bestimmten zweiten Linienspektren und/oder zweiten Varianzen zur Verifizierung eingesetzt werden können. Deshalb kann bei einer Nutzung der vorliegenden Erfindung ein sich lösendes Rad mit einer relativ hohen Wahrscheinlichkeit frühzeitig erkannt werden, wobei mit einer vergleichsweise hohen Eindeutigkeit andere Ursachen/Fehlerursachen für das Auftreten der charakteristischen Veränderungen in den bestimmten ersten Linienspektren und/oder ersten Varianzen ausgeschlossen werden können. Die vorliegende Erfindung schafft somit Möglichkeiten zur frühzeitigen und verlässlichen Erkennung des zumindest einen sich lösenden Rads, welche eine gute Robustheit gegenüber weiteren Umweltfaktoren, wie z.B. einem Straßenrauschen, aufweisen.

Ein weiterer Vorteil der vorliegenden Erfindung besteht darin, dass die zur Nutzung der vorliegenden Erfindung auszuführenden Rechen- und Signalverarbeitungsprozesse mittels eines relativ geringen Arbeitsaufwands durchführbar sind. Außerdem kann zum Ausführen dieser Rechen- und Signalverarbeitungsprozesse eine wesentlich günstigere Hardware als für den oben beschriebenen Stand der Technik eingesetzt werden.

In einer vorteilhaften Ausführungsform der Sensorvorrichtung ist die Auswerteelektronik dazu ausgelegt, eine Differenz und/oder einen Quotienten mindestens einer der ersten Amplituden des ersten Linienspektrums verglichen mit der entsprechenden zweiten Amplitude des zweiten Linienspektrums zu bestimmen, und, sofern die bestimmte Differenz und/oder der bestimmte Quotient größer als eine für das jeweilige Rad vorgegebene Vergleichsdifferenz und/oder als ein für das jeweilige Rad vorgegebener Vergleichsquotient ist, festzulegen, dass das mindestens eine Radbefestigungsmittel des jeweiligen Rads sich löst. Ein Auswerten der ersten Amplituden des ersten Linienspektrums und der zweiten Amplitude des zweiten Linienspektrums zum Festlegen, ob das mindestens eine Befestigungsmittel des jeweiligen Rads sich löst, ist somit mittels eines einfach und schnell ausführbaren Rechen- und Signalverarbeitungsprozesses möglich.

Als vorteilhafte Weiterbildung kann die Auswerteelektronik auch dazu ausgelegt sein, während einer Fahrt des Kraftfahrzeugs mit einem aktuellen Lenkwinkel über dem vorgegebenen Grenzlenkwinkel, wobei das jeweilige Rad während des Überschreitens des vorgegebenen Grenzlenkwinkels an einer Kurvenaußenseite des Kraftfahrzeugs liegt, eine Vielzahl von dritten Werten der Größe zu bestimmen und dritte Amplituden eines dritten Linienspektrums der Vielzahl von dritten Werten und/oder eine dritte Varianz der Vielzahl von dritten Werten festzulegen, und unter Berücksichtigung zumindest der dritten Amplituden des dritten Linienspektrums und/oder der dritten Varianz festzulegen, ob an mehreren Radbefestigungsmitteln des jeweiligen Rads ungleichmäßige Lösungsweiten vorliegen. Mittels der hier beschriebenen Ausführungsform der Sensorvorrichtung können somit noch zusätzliche Informationen bezüglich eines sich lösenden Rads ermittelt werden.

Vorzugsweise ist die Auswerteelektronik dazu ausgelegt, anhand eines von einem an einer Multipolscheibe des jeweiligen Rads angeordneten Drehzahlsensor bereitgestellten Sensorsignals bezüglich einer innerhalb eines Messvolumens des Drehzahlsensors zeitlich-variierenden Magnetfeldstärke Zeitintervalle, innerhalb welcher jeweils einer der Polbereich der Multipolscheibe das Messvolumen des Drehzahlsensors durchläuft, zu bestimmen, einen Mittelwert über alle Zeitintervalle aller Polbereiche der Multipolscheibe festzulegen, und die Vielzahl von ersten Werten, Vielzahl von zweiten Werten oder Vielzahl von dritten Werten als Quotienten der bestimmten Zeitintervalle geteilt durch den Mittelwert festzulegen. Diese Quotienten können als geschwindigkeitsunabhängige Werte anschließend verlässlich ausgewertet werden, wobei für (nahezu) alle Geschwindigkeiten des Kraftfahrzeugs standardgemäß vorgegangen werden kann.

Beispielsweise ist die Auswerteelektronik dazu ausgelegt, die ersten Amplituden des ersten Linienspektrums, die zweiten Amplituden des zweiten Linienspektrums und/oder die dritten Amplituden des dritten Linienspektrums mittels einer Fourier-Transformation und/oder einer Filterung festzulegen. Zum Ausführen derartiger Rechenprozesse ist eine kostengünstige und wenig bauraumbenötigende Hardware in der Regel ausreichend.

Auch ein Ausführen eines korrespondierenden Verfahrens zum Untersuchen eines Befestigungszustands zumindest eines Rads eines Kraftfahrzeugs schafft die vorausgehend beschriebenen Vorteile. Es wird ausdrücklich darauf hingewiesen, dass das Verfahren zum Untersuchen eines Befestigungszustands zumindest eines Rads eines Kraftfahrzeugs gemäß den oben erläuterten Ausführungsformen von Steuervorrichtungen weitergebildet werden kann.

### Kurze Beschreibung der Zeichnungen

Weitere Merkmale und Vorteile der vorliegenden Erfindung werden nachfolgend anhand der Figuren erläutert. Es zeigen:
- Fig. 1a bis 1g: ein Flussdiagramm und schematische Darstellungen eines an einem Kraftfahrzeug angebrachten Rads zum Erläutern einer Ausführungsform des Verfahrens zum Untersuchen eines Befestigungszustands zumindest eines Rads eines Kraftfahrzeugs; und
- Fig. 2: eine schematische Darstellung einer Ausführungsform der Sensorvorrichtung für ein Kraftfahrzeug.

### Ausführungsformen der Erfindung

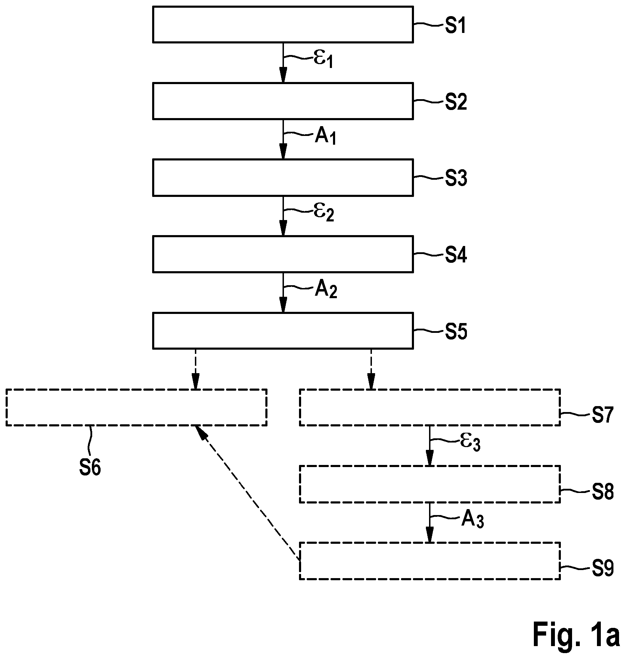

Fig. 1a bis 1g zeigen ein Flussdiagramm und schematische Darstellungen eines an einem Kraftfahrzeug angebrachten Rads zum Erläutern einer Ausführungsform des Verfahrens zum Untersuchen eines Befestigungszustands zumindest eines Rads eines Kraftfahrzeugs.

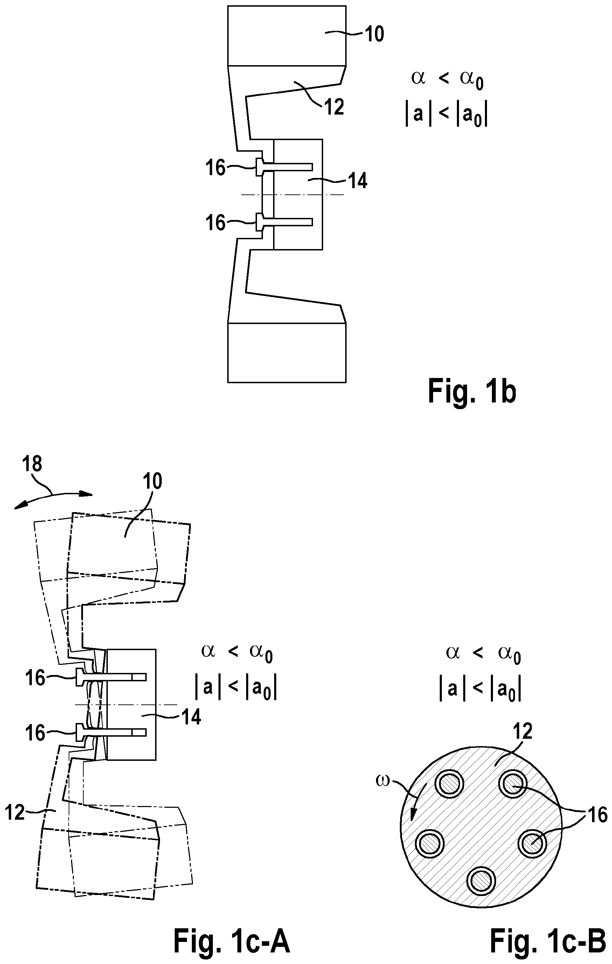

Mittels des im Weiteren beschriebenen Verfahrens können alle Räder eines Kraftfahrzeugs auf ein eventuelles Lösen von dem Kraftfahrzeug untersucht werden. Das jeweilige Kraftfahrzeug kann beispielsweise ein Personenkraftwagen (PKW), ein Lastkraftwagen (LKW) oder ein Flugzeug sein. Eine Ausführbarkeit des im Weiteren beschriebenen Verfahrens ist jedoch nicht auf die hier aufgezählten Kraftfahrzeugtypen beschränkt. Ebenso kann das hier beschriebene Verfahren für alle Rädertypen, bei welchen das jeweilige Rad 10, wie in Fig. 1b bis 1g gezeigt, durch Befestigen seiner Felge 12 an einer Radnabe 14 mittels mindestens eines Radbefestigungsmittels 16 an seinem Kraftfahrzeug montiert ist, genutzt werden. Das jeweilige Rad 10 kann auch ein Reifen sein. Unter dem mindestens einen Radbefestigungsmittel 16 können beispielsweise jeweils eine Radschraube und/oder jeweils ein Radbolzen und seine zugehörige Radmutter verstanden werden. Das im Weiteren beschriebene Verfahren ist somit vielseitig einsetzbar.

In einem Verfahrensschritt S1 wird eine Vielzahl von ersten Werten ε₁ einer Größe, welche eine durch Vibration der Felge 12 des jeweiligen Rads 10 in Bezug zu der Radnabe 14 des jeweiligen Rads 10 ausgelöste Modulation einer Raddrehzahl ω des jeweiligen Rads 10 wiedergibt, bestimmt. Der Verfahrensschritt S1 wird während einer Fahrt des Kraftfahrzeugs mit einem aktuellen Lenkwinkel/Lenkradwinkel α unter einem vorgegebenen Grenzlenkwinkel α₀ und mit einem Betrag |a| einer aktuellen Beschleunigung des Kraftfahrzeugs unter einem Grenzbetrag |a₀| ausgeführt. In einem weiteren Verfahrensschritt S2 werden erste Amplituden/Spektralamplituden A₁ eines ersten Linienspektrums der Vielzahl von ersten Werten ε₁ und/oder eine erste Varianz der Vielzahl von ersten Werten ε₁ festgelegt. Das Festlegen der ersten Amplituden A₁ des ersten Linienspektrums kann beispielsweise mittels einer Fourier-Transformation oder mittels einer Filterung erfolgen. Die ersten Amplituden A₁ der ersten Linienspektren können insbesondere als gleitende Mittelwerte gebildet werden.

Fig. 1b zeigt das Rad 10 in einem "festen Befestigungszustand", d.h. die Felge 12 des Rads 10 ist mittels des mindestens einen Radbefestigungsmittels 16 verlässlich an der Radnabe 14 des Rads 10 befestigt. Man kann den "festen Befestigungszustand" auch als "festes Rad 10" umschreiben, bei welchem das mindestens eine Radbefestigungsmittel 16 des Rads 10 in seiner gewünschten Soll-Position vorliegt. Im "festen Befestigungszustand" des Rads 10 treten selbst während einer Fahrt des Kraftfahrzeugs mit einem aktuellen Lenkwinkel α unter dem vorgegebenen Grenzlenkwinkel α₀ und mit einem Betrag |a| seiner aktuellen Beschleunigung unter dem vorgegebenen Grenzbetrag |a₀| (im Wesentlichen) keine Vibrationen der Felge 12 in Bezug zu der Radnabe 14 auf.

Die Fig. 1c-A und 1c-B zeigen das Rad 10 in einem "teils-gelösten Befestigungszustand", d.h. dass das mindestens eine Radbefestigungsmittel 16 des "gelösten Rads 10" sich teilweise aus seiner gewünschten Soll-Position gelöst hat. In dem Beispiel der Fig. 1c-A und 1c-B fährt das mit dem Rad 10 ausgestattete Kraftfahrzeug mit einem aktuellen Lenkwinkel α unter dem vorgegebenen Grenzlenkwinkel α₀ und mit einem Betrag |a| seiner aktuellen Beschleunigung unter dem vorgegebenen Grenzbetrag |a₀|, weshalb (im Wesentlichen) keine Kraft auf das mindestens eine Radbefestigungsmittel 16 einwirkt, welche das mindestens eine Radbefestigungsmittel 16 gegen die jeweils umgebenden Felgenlochwände der Felge 12 drückt (siehe Fig. 1c-B). Deshalb liegt in dem Beispiel der Fig. 1c-A und 1c-B nur ein relativ geringer Kraftschluss zwischen der Felge 12, der Radnabe 14 und dem mindestens einen Radbefestigungsmittel 16 vor. Aufgrund des geringen Kraftschlusses zwischen der Felge 12, der Radnabe 14 und dem mindestens einen Radbefestigungsmittel 16 des Rads 10 kann die Felge 12 die mittels der Pfeile 18 schematisch wiedergegebenen Vibrationen in Bezug zu der Radnabe 14 ausführen. Man kann dabei auch von "Radvibrationen" des Rads 10 sprechen, welche aufgrund des geringen Kraftschlusses uneingeschränkt ausgeführt werden können.

Anhand eines Vergleichs der Fig. 1b, 1c-A und 1c-B erkennt man somit, dass die während einer Fahrt des Kraftfahrzeugs mit einem aktuellen Lenkwinkel α unter dem vorgegebenen Grenzlenkwinkel α₀ und mit einem Betrag |a| seiner aktuellen Beschleunigung unter dem Grenzbetrag |a₀| mittels des Verfahrensschritts S1 bestimmte Vielzahl von ersten Werten ε₁, und entsprechend auch die mittels des Verfahrensschritts S2 festgelegten ersten Amplituden A₁ des ersten Linienspektrums und/oder die erste Varianz, beeinflusst/abhängig von dem Befestigungszustand des Rads 10 ("fester Befestigungszustand" oder "teils-gelöster Befestigungszustand") sind.

Das Verfahren weist auch einen Verfahrensschritt S3 auf, welcher wahlweise vor oder nach den Verfahrensschritten S1 und S2 ausgeführt werden kann. In dem Verfahrensschritt S3 wird eine Vielzahl von zweiten Werten ε₂ der Größe während einer Fahrt des Kraftfahrzeugs mit einem aktuellen Lenkwinkel α über dem vorgegebenen Grenzlenkwinkel α₀, wobei das jeweilige Rad 10 während eines Überschreitens des vorgegebenen Grenzlenkwinkels α₀ an einer Kurveninnenseite liegt, und/oder mit einem Betrag |a| einer aktuellen Beschleunigung des Kraftfahrzeugs über dem vorgegebenen Grenzbetrag |a₀| bestimmt, wobei eine aktuelle Beschleunigung des Kraftfahrzeugs mit einem Betrag |a| über dem vorgegebenen Grenzbetrag |a₀| wahlweise positiv oder negativ sein kann. In einem weiteren Verfahrensschritt S4 werden zweite Amplituden/Spektralamplituden A₂ eines zweiten Linienspektrums der Vielzahl von zweiten Werten ε₂ und/oder eine zweite Varianz der Vielzahl von zweiten Werten ε₂ festgelegt. Die zweiten Amplituden A₂ des zweiten Linienspektrums können mittels einer Fourier-Transformation oder mittels einer Filterung festgelegt werden. Auch die zweiten Amplituden A₂ des zweiten Linienspektrums können als gleitende Mittelwerte festgelegt werden.

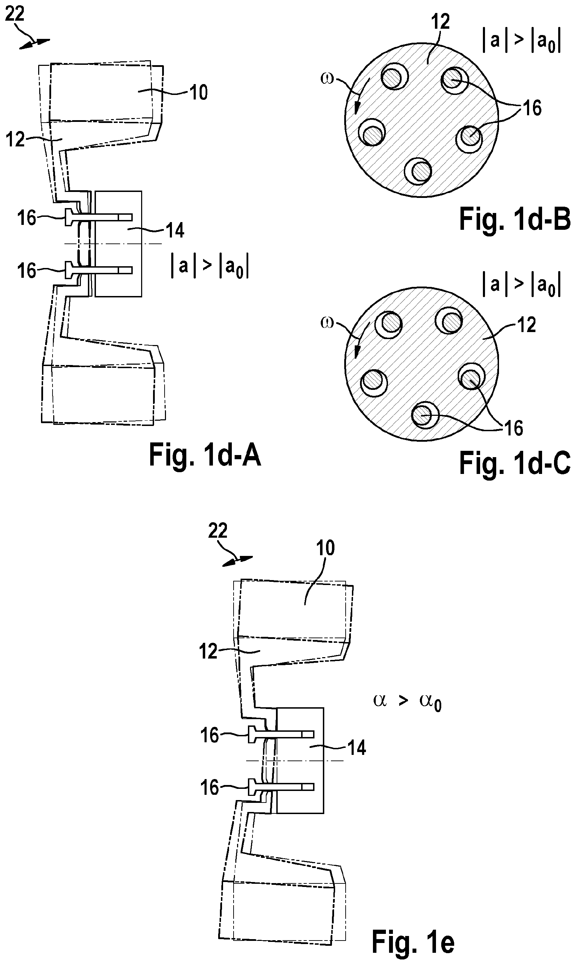

Fig. 1d-A bis Fig. 1d-C zeigen das im "teils-gelösten Befestigungszustand" vorliegende Rad 10 während einer Fahrt des Kraftfahrzeugs mit einem Betrag |a| seiner aktuellen Beschleunigung über dem vorgegebenen Grenzbetrag |a₀|. Unter der Fahrt des Kraftfahrzeugs mit einem Betrag |a| seiner aktuellen Beschleunigung über dem vorgegebenen Grenzbetrag |a₀| kann eine stark beschleunigte Fahrt des Kraftfahrzeugs oder eine stark abgebremste Fahrt des Kraftfahrzeugs verstanden werden. Aufgrund des Betrags |a| der aktuellen Beschleunigung über dem vorgegebenen Grenzbetrag |a₀| tritt eine tangentiale Relativbewegung zwischen der Felge 12 und der Radnabe 14 auf, wie mittels der Fig. 1d-B (für eine stark beschleunigte Fahrt des Kraftfahrzeugs) und der Fig. 1d-C (für eine stark abgebremste Fahrt des Kraftfahrzeugs) wiedergegeben ist. Die tangentiale Relativbewegung zwischen der Felge 12 und der Radnabe 14 verschiebt das mechanische Spiel zwischen dem mindestens einen Radbefestigungsmittel 16 und den jeweils umgebenden Felgenlochwänden der Felge 12 asymmetrisch. Dies bewirkt einen erhöhten Kraftschluss in tangentialer Richtung zwischen der Felge 12, der Radnabe 14 und dem mindestens einen Radbefestigungsmittel 16 des Rads 10. Eine Reibung tritt an dem mindestens einen Radbefestigungsmittel 16 und den davon kontaktierten Felgenlochwänden der Felge 12 auf, welche, wie mittels eines Pfeils 22 wiedergegeben, einem Vibrieren der Felge 12 in Bezug zu der zugeordneten Radnabe 14 des Rads 10 entgegenwirkt.

Fig. 1e zeigt das Rad 10 in "teils-gelöstem Befestigungszustand" während einer Fahrt seines Kraftfahrzeugs mit einem aktuellen Lenkwinkel α über dem vorgegebenen Grenzlenkwinkel α₀, wobei das Rad 10 während des Überschreitens des aktuellen Lenkwinkels α₀ an der Kurveninnenseite des Kraftfahrzeugs liegt. Aufgrund des Überschreitens des aktuellen Lenkwinkels α₀ werden das auf der Kurveninnenseite des Kraftfahrzeugs liegende Rad 10 und seine Felge 12 während der starken Kurvenfahrt axial auf dem mindestens einen Radbefestigungsmittel 16 verschoben und auf diese Weise gegen die Radnabe 14 gedrückt. Die Folge ist eine erhöhte Reibung an einer Kontaktstelle zwischen Felge 12 und Radnabe 14. Dies kann auch als ein erhöhter Kraftschluss in axialer Richtung zwischen der Felge 12, der Radnabe 14 und dem mindestens einen Radbefestigungsmittel 16 bezeichnet werden. Die erhöhte Reibung zwischen der Felge 12 und der davon kontaktierten Radnabe 14 wirkt, wie mittels des Pfeils 22 in Fig. 1e bildlich dargestellt ist, Vibrationen der Felge 12 in Bezug zu der Radnabe 14 entgegen.

Anhand der Fig. 1d und 1e erkennt man somit, dass die während einer Fahrt des Kraftfahrzeugs mit einem aktuellen Lenkwinkel α über dem vorgegebenen Grenzlenkwinkel α₀, wobei das jeweilige Rad 10 während eines Überschreitens des vorgegebenen Grenzlenkwinkels α₀ an einer Kurveninnenseite liegt, und/oder mit einem Betrag |a| einer aktuellen Beschleunigung des Kraftfahrzeugs über dem vorgegebenen Grenzbetrag |a₀| mittels des Verfahrensschritts S3 bestimmte Vielzahl von zweiten Werten ε₂, und entsprechend auch die mittels des Verfahrensschritts S4 festgelegten zweiten Amplituden A₂ des zweiten Linienspektrums und/oder die zweite Varianz, unbeeinflusst/unabhängig von dem Befestigungszustand des Rads 10 sind.

In einem nach den Verfahrensschritten S1 bis S4 ausgeführten Verfahrensschritt S5 wird festgelegt, ob sich das mindestens eine Radbefestigungsmittel 16 des Rads 10 löst. Dies geschieht unter Berücksichtigung der ersten Amplituden A₁ des ersten Linienspektrums und/oder der ersten Varianz und unter Berücksichtigung der zweiten Amplituden A₂ des zweiten Linienspektrums und/oder der zweiten Varianz. Die Erkennung einer eventuellen Radlösung des Rads 10 von dem Kraftfahrzeug erfolgt vorzugsweise bei Feststellen einer Zunahme mindestens einer der ersten Amplituden A₁ des ersten Linienspektrums im Vergleich mit der entsprechenden zweiten Amplitude A₂ des zweiten Linienspektrums. Beispielsweise können eine Differenz und/oder ein Quotient mindestens einer der ersten Amplituden A₁ des ersten Linienspektrums verglichen mit der entsprechenden zweiten Amplitude A₂ des zweiten Linienspektrums bestimmt werden. Sofern die bestimmte Differenz und/oder der bestimmte Quotient größer als eine für das Rad 10 vorgegebene Vergleichsdifferenz und/oder als ein für das Rad 10 vorgegebener Vergleichsquotient sind, wird vorzugsweise festgelegt, dass das mindestens eine Radbefestigungsmittel 16 des Rads 10 sich löst. Zur Auswertung der ersten Amplituden A₁ des ersten Linienspektrums und der zweiten Amplituden A₂ des zweiten Linienspektrums müssen nicht alle ersten Amplituden A₁ und alle zweiten Amplituden A₁ miteinander ausgewertet werden. Häufig kann die Auswertung der Amplituden A₁ und A₂ der Linienspektren auf spezielle Spektrallinien, wie beispielsweise bei einer Befestigung des Rads 10 mit genau fünf Radbefestigungsmitteln 16 an der Radnabe 16 auf die Spektrallinien 2, 3, 4, 5 und 10, beschränkt werden. Alternativ können die ersten Amplituden A₁ des ersten Linienspektrums auch mit einem ersten Vergleichsspektrum und Amplituden eines "Differenzspektrums" des ersten Linienspektrums minus dem zweiten Linienspektrum mit einem zweiten Vergleichsspektrum verglichen werden.

Das Auswerten der mittels der Verfahrensschritte S1 bis S4 festgelegten ersten Amplituden A₁ des ersten Linienspektrums/ersten Varianz und der zweiten Amplituden A₂ des zweiten Linienspektrums/zweiten Varianz in dem Verfahrensschritt S5 ermöglicht eine eindeutige und robuste Zuordnung der beobachteten Charakteristika entweder zu dem "festen Befestigungszustand" des Rads 10 ("festes Rad 10") oder zu dem "teils-gelösten Befestigungszustand" des Rads 10 ("gelöstes Rad 10"). Damit bewirkt das Verfahren die oben schon aufgezählten Vorteile.

Sofern ein Lösen des mindestens einen Radbefestigungsmittels 16 des Rads 10, bzw. ein "teils-gelöster Befestigungszustand" des Rads 10 erkannt wird, können in einem (optionalen) Verfahrensschritt S6 mindestens eine Warnlampe, mindestens eine optische Anzeigevorrichtung und/oder mindestens eine akustische Signalausgabevorrichtung zur Benachrichtigung eines Fahrers des jeweiligen Kraftfahrzeugs aktiviert werden. Der Fahrer des jeweiligen Kraftfahrzeugs kann somit mittels eines Warnleuchtens oder Warnblinkens der mindestens einen Warnlampe, mittels einer Bild- und/oder Schriftanzeige der mindestens einen optischen Anzeigevorrichtung und/oder mittels eines Ton- und/oder Sprachsignals der mindestens einen akustischen Signalausgabevorrichtung frühzeitig auf das Lösen des mindestens einen Radbefestigungsmittels 16 des Rads 10 hingewiesen werden. Auch mindestens eine fahrzeugexterne optische Anzeigevorrichtung und/oder mindestens eine fahrzeugexterne akustische Signalausgabevorrichtung, wie beispielsweise ein Mobiltelefon des Fahrers, können zur Benachrichtigung des Fahrers genutzt werden. Alternativ oder ergänzend kann bei Erkennen des "teils-gelösten Befestigungszustands" des Rads 10 auch in dem Verfahrensschritt S6 eine entsprechende Nachricht an eine Werkstatt gesendet werden.

Als vorteilhafte Weiterbildung kann das Verfahren noch weitere (optionale) Verfahrensschritte S7 bis S9 umfassen: In einem Verfahrensschritt S7 wird eine Vielzahl von dritten Werten ε₃ der Größe während einer Fahrt des Kraftfahrzeugs mit einem aktuellen Lenkwinkel α über dem vorgegebenen Grenzlenkwinkel α₀, wobei das Rad 10 während des Überschreitens des vorgegebenen Grenzlenkwinkels α₀ an einer Kurvenaußenseite des Kraftfahrzeugs liegt, bestimmt. Danach werden in einem Verfahrensschritt S8 dritte Amplituden/Spektralamplituden A₃ eines dritten Linienspektrums der Vielzahl von dritten Werten ε₃ und/oder eine dritte Varianz der Vielzahl von dritten Werten ε₃ festgelegt. Erneut können eine Fourier-Transformation oder eine Filterung zum Festlegen der dritten Amplituden A₃ des dritten Linienspektrums ausgeführt werden. Die dritten Amplituden A₃ des dritten Linienspektrums können als gleitende Mittelwerte festgelegt werden.

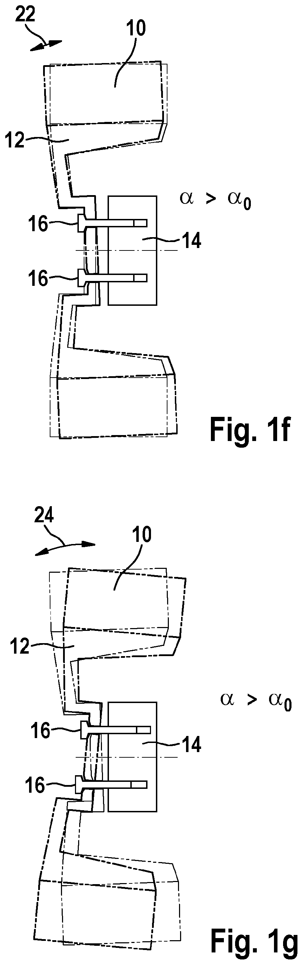

Fig. 1f zeigt das im "teils-gelösten Befestigungszustand" vorliegende Rad 10 während einer Fahrt seines Kraftfahrzeugs mit einem aktuellen Lenkwinkel α über dem vorgegebenen Grenzlenkwinkel α₀, wobei das Rad 10 während des Überschreitens des vorgegebenen Grenzlenkwinkels α₀ an einer Kurvenaußenseite des Kraftfahrzeugs liegt. Da eine Löseweite der mindestens zwei Radbefestigungsmittel 16, mittels welchen das Rad 10 und seine Felge 12 an der Radnabe 14 des Rads 10 befestigt sind, (im Wesentlichen) gleich ist, können Rad 10 und Felge 12 mittels einer darauf wirkenden Kraft so zu der Radnabe 14 des Rads 10 verschoben werden, dass Köpfe der mindestens zwei Befestigungsmittel 16, wie beispielsweise die Schraubenköpfe der Befestigungsmittel 16 der Fig. 1f, die Felge 12 kontaktieren. Damit tritt ein Formschluss zwischen der Felge 12 und den die Felge 12 kontaktierenden Köpfen der mindestens zwei Befestigungsmittel 16 des Rads 10 auf. Dieser Formschluss wirkt dem mechanischen Spiel zwischen den mindestens zwei Befestigungsmitteln 16 und den diese umgebenden Felgenlochwänden der Felge 12 entgegen. Sofern, wie in Fig. 1f mittels des Pfeils 22 gezeigt, eine (nahezu) gleichmäßige Löseweite an allen Befestigungsmitteln 16 des Rads 10 vorliegt, sind Vibrationen der Felge 12 in Bezug zu der Radnabe 16 somit kaum/nur begrenzt möglich.

Auch das in Fig. 1g dargestellte Rad 10 befindet sich im "teils-gelösten Befestigungszustand" und liegt während einer Kurvenfahrt seines Kraftfahrzeugs mit einem aktuellen Lenkwinkel α über dem vorgegebenen Grenzlenkwinkel α₀ an der Kurvenaußenseite des Kraftfahrzeugs. Im Gegensatz zu dem Beispiel der Fig. 1f weisen die mindestens zwei Radbefestigungsmittel 16 des Rads 10 der Fig. 1g jedoch unterschiedliche/ungleichmäßige Löseweiten auf. Deshalb kommt es nur bei bestimmten Lenkwinkeln α zu dem oben beschriebenen Formschluss. Die mittels des Pfeils 24 schematisch wiedergegebenen Vibrationen können deshalb trotz der Kurvenfahrt mit Überschreiten des vorgegebenen Höchstwinkels α₀ an dem kurvenäußeren Rad 10 auftreten. (Die Vibrationen treten insbesondere häufig bei der zweiten Radharmonischen auf.)

In dem Verfahrensschritt S9 kann deshalb unter Berücksichtigung zumindest der dritten Amplituden A₃ des dritten Linienspektrums und/oder der dritten Varianz festgelegt werden, ob an mehreren Radbefestigungsmitteln 16 des Rads 10 ungleichmäßige Lösungsweiten vorliegen. Auch die auf diese Weise gewonnenen Informationen können mittels der mindestens einen Warnlampe, der mindestens einen optischen Anzeigevorrichtung und/oder der mindestens einen akustischen Signalausgabevorrichtung dem Fahrer des Kraftfahrzeugs mitgeteilt oder an eine Werkstatt ausgesendet werden.

Zum Ermitteln, ob der aktuelle Lenkwinkel/Lenkradwinkel α unter oder über dem vorgegebenen Grenzlenkwinkel α₀ liegt, kann mindestens ein Lenkradwinkelsensor-Signal eines Lenkradwinkelsensors ausgewertet werden. Der Betrag |a| der aktuellen Beschleunigung des Kraftfahrzeugs, wobei die aktuelle Beschleunigung wahlweise positiv oder negativ sein kann, kann z. B. anhand einer Gaspedalstellung, anhand einer Bremspedalstellung und/oder anhand eines Bremsdrucks festgelegt werden. Das Festlegen des Betrags |a| der aktuellen Beschleunigung des Kraftfahrzeugs kann insbesondere unter Berücksichtigung mindestens eines Gaspedalsensor-Signals eines Gaspedalsensors, mindestens eines Stangenweg-Signals eines Stangenwegsensors, mindestens eines Differenzweg-Signals eines Differenzwegsensors und/oder mindestens eines Bremsdrucksensor-Signals eines Bremsdrucksensors erfolgen. Die hier genannten Sensortypen sind an einem Kraftfahrzeug in der Regel bereits vorhanden, so dass ein Ausführen des hier beschriebenen Verfahrens keine zusätzliche Sensorik an dem Kraftfahrzeug erfordert.

Vorzugsweise werden zu einem Bestimmen der Größe, welche die durch Vibration der Felge 12 des Rads 10 in Bezug zu der Radnabe 14 des Rads 10 ausgelöste Modulation der Raddrehzahl ω des Rads 10 wiedergibt, d.h. zum Bestimmen der Vielzahl von ersten Werten ε₁, Vielzahl von zweiten Werten ε₂ und/oder Vielzahl von dritten Werten ε₃, die folgenden Teilschritte ausgeführt:
Durch Einsetzen eines an einer Multipolscheibe des Rads 10 angeordneten Drehzahlsensors wird eine innerhalb eines Messvolumens des Drehzahlsensors zeitlich-variierende Magnetfeldstärke gemessen. Anschließend werden Zeitintervalle Δt, innerhalb welcher jeweils einer der Polbereich der Multipolscheibe das Messvolumen des Drehzahlsensors durchläuft, anhand der gemessenen zeitlich-variierenden Magnetfeldstärke bestimmt.

Eine Gesamtanzahl N von Polbereichen der Multipolscheibe ist in der Regel bekannt. Eine Summe der Zeitintervalle Δt über alle N Polbereiche der Multipolscheibe entspricht einer Umdrehungszeit T der Multipolscheibe: T = Σ Δt

Anschließend wird ein Mittelwert Δtₘ über alle Zeitintervalle Δt aller N Polbereiche der Multipolscheibe festgelegt mit: Δtₘ = T/N

Als Vielzahl von ersten Werten ε₁, Vielzahl von zweiten Werten ε₂ oder Vielzahl von dritten Werten ε₃ werden Quotienten der bestimmten Zeitintervalle Δt geteilt durch den Mittelwert Δtₘ bestimmt mit: ε_{1/2/3} = Δt/Δtₘ

Die auf diese Weise bestimmten ersten Werte ε₁, zweiten Werte ε₂ und/oder dritten Werte ε₃ sind geschwindigkeitsunabhängige Werte, d. h. die Werte ε₁, ε₂ und ε₃ sind unabhängig von einer aktuellen Geschwindigkeit des Kraftfahrzeugs. Als optionale Weiterbildung kann noch ein sogenannter Encoderrad-Zahnteilungsfehler bei den ersten Werten ε₁, zweiten Werten ε₂ und/oder dritten Werte ε₃ kompensiert werden. Allerdings kann auf die Kompensation des Encoderrad-Zahnteilungsfehlers häufig auch verzichtet werden, da die Auswirkungen der Vibrationen des "gelösten Rads" auf die ersten Werte ε₁ und/oder dritten Werte ε₃ signifikant im Vergleich zu dem Encoderrad-Zahnteilungsfehler sind.

Ebenso kann oft auch auf die Bestimmung des Mittelwerts Δtₘ verzichtet werden, und die ersten Werte ε₁, zweiten Werten ε₂ und/oder dritten Werte ε₃ können als "geschwindigkeitsabhängige" Werte weiter ausgewertet werden.

Die oben genannten Teilschritte zum Bestimmen der ersten Werten ε₁, zweiten Werten ε₂ und/oder dritten Werte ε₃ in den Verfahrensschritten S1, S2 und S7 sind jedoch nur beispielhaft zu interpretieren.

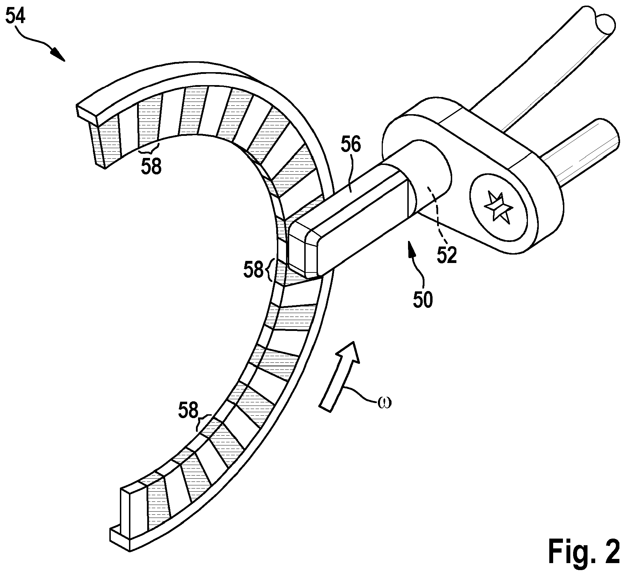

Fig. 2 zeigt eine schematische Darstellung einer Ausführungsform der Sensorvorrichtung für ein Kraftfahrzeug.

Die im Weiteren beschriebene Sensorvorrichtung 50 ist an allen oben aufgezählten Kraftfahrzeugtypen einsetzbar. Eine Verwendbarkeit der Sensorvorrichtung 50 ist allerdings nicht auf die oben aufgezählten Kraftfahrzeugtypen beschränkt. Außerdem kann die Sensorvorrichtung 50 für alle oben umschriebenen Radtypen eingesetzt werden.

Die Sensorvorrichtung 50 weist eine Auswerteelektronik 52 auf, welche dazu ausgelegt ist, für zumindest ein Rad des Kraftfahrzeugs, von welchem nur eine an dem Rad befestigte Multipolscheibe 54 in Fig. 2 skizziert ist, während einer Fahrt des Kraftfahrzeugs mit einem aktuellen Lenkwinkel unter einem vorgegebenen Grenzlenkwinkel und mit einem Betrag einer aktuellen Beschleunigung des Kraftfahrzeugs unter einem vorgegebenen Grenzbetrag eine Vielzahl von ersten Werten einer Größe, welche eine durch Vibration einer Felge des jeweiligen Rads in Bezug zu einer Radnabe des jeweiligen Rads ausgelöste Modulation einer Raddrehzahl ω des jeweiligen Rads wiedergibt, zu bestimmen. Die Auswerteelektronik 52 legt dann erste Amplituden eines ersten Linienspektrums der Vielzahl von ersten Werten und/oder eine erste Varianz der Vielzahl von ersten Werten fest.

Ebenso ist die Auswerteelektronik 52 dazu ausgelegt, während einer Fahrt des Kraftfahrzeugs mit einem aktuellen Lenkwinkel über dem vorgegebenen Grenzlenkwinkel, wobei das jeweilige Rad während eines Überschreitens des vorgegebenen Grenzlenkwinkels an einer Kurveninnenseite des Kraftfahrzeugs liegt, und/oder mit einem Betrag einer aktuellen Beschleunigung des Kraftfahrzeugs über dem vorgegebenen Grenzbetrag eine Vielzahl von zweiten Werten der Größe zu bestimmen. Die Auswerteelektronik 52 legt danach auch zweite Amplituden eines zweiten Linienspektrums der Vielzahl von zweiten Werten und/oder eine zweite Varianz der Vielzahl von zweiten Werten fest.

Anschließend legt die Auswerteelektronik 52 unter Berücksichtigung der ersten Amplituden des ersten Linienspektrums und/oder der ersten Varianz und unter Berücksichtigung der zweiten Amplituden des zweiten Linienspektrums und/oder der zweiten Varianz fest, ob mindestens ein Radbefestigungsmittel des jeweiligen Rads sich löst. Damit bewirkt die hier beschriebene Sensorvorrichtung die Vorteile des oben erläuterten Verfahrens.

Die Auswerteelektronik 52 kann insbesondere zum Ausführen aller Verfahrensschritte des oben erläuterten Verfahrens ausgelegt sein. Insbesondere kann die Auswerteelektronik 52 dazu ausgelegt ist, während einer Fahrt des Kraftfahrzeugs mit einem aktuellen Lenkwinkel über dem vorgegebenen Grenzlenkwinkel, wobei das jeweilige Rad während des Überschreitens des vorgegebenen Grenzlenkwinkels an einer Kurvenaußenseite des Kraftfahrzeugs liegt, eine Vielzahl von dritten Werten der Größe zu bestimmen. Anschließend legt die Auswerteelektronik 52 dritte Amplituden eines dritten Linienspektrums der Vielzahl von dritten Werten und/oder eine dritte Varianz der Vielzahl von dritten Werten fest. Wie oben bereits erläutert ist, kann die Auswerteelektronik 52 in diesem Fall unter Berücksichtigung zumindest der dritten Amplituden des dritten Linienspektrums und/oder der dritten Varianz festzulegen, ob an mehreren Radbefestigungsmitteln des jeweiligen Rads ungleichmäßige Lösungsweiten vorliegen.

Vorzugsweise ist die Auswerteelektronik 52 dazu ausgelegt, anhand eines Sensorsignals eines an der Multipolscheibe 54 angeordneten Drehzahlsensors 56 bezüglich einer innerhalb eines Messvolumens des Drehzahlsensors 56 zeitlich-variierenden Magnetfeldstärke Zeitintervalle, innerhalb welcher jeweils einer der Polbereich 58 der Multipolscheibe 54 das Messvolumen des Drehzahlsensors 56 durchläuft, zu bestimmen. Danach kann die Auswerteelektronik 52, wie oben beschrieben, einen Mittelwert über alle Zeitintervalle aller Polbereiche 58 der Multipolscheibe 54 festzulegen, und die Vielzahl von ersten Werten, Vielzahl von zweiten Werten oder Vielzahl von dritten Werten als Quotienten der bestimmten Zeitintervalle geteilt durch den Mittelwert festzulegen.

## Patentansprüche

1. Sensorvorrichtung (50) für ein Kraftfahrzeug mit:
einer Auswerteelektronik (52), welche dazu ausgelegt ist, für zumindest ein Rad (10) des Kraftfahrzeugs:
- während einer Fahrt des Kraftfahrzeugs mit einem aktuellen Lenkwinkel (α) unter einem vorgegebenen Grenzlenkwinkel (α₀) und mit einem Betrag (|a|) einer aktuellen Beschleunigung des Kraftfahrzeugs unter einem vorgegebenen Grenzbetrag (|a₀|) eine Vielzahl von ersten Werten (ε₁) einer Größe, welche eine durch Vibration einer Felge (12) des jeweiligen Rads (10) in Bezug zu einer Radnabe (14) des jeweiligen Rads (10) ausgelöste Modulation einer Raddrehzahl (ω) des jeweiligen Rads (10) wiedergibt, zu bestimmen und erste Amplituden (A₁) eines ersten Linienspektrums der Vielzahl von ersten Werten (ε₁) und/oder eine erste Varianz der Vielzahl von ersten Werten (ε₁) festzulegen;
- während einer Fahrt des Kraftfahrzeugs mit einem aktuellen Lenkwinkel (α) über dem vorgegebenen Grenzlenkwinkel (α₀), wobei das jeweilige Rad (10) während eines Überschreitens des vorgegebenen Grenzlenkwinkels (α₀) an einer Kurveninnenseite des Kraftfahrzeugs liegt, und/oder mit einem Betrag (|a|) einer aktuellen Beschleunigung des Kraftfahrzeugs über dem vorgegebenen Grenzbetrag (|a₀|) eine Vielzahl von zweiten Werten (ε₂) der Größe zu bestimmen und zweite Amplituden (A₂) eines zweiten Linienspektrums der Vielzahl von zweiten Werten (ε₂) und/oder eine zweite Varianz der Vielzahl von zweiten Werten (ε₂) festzulegen; und
- unter Berücksichtigung der ersten Amplituden (A₁) des ersten Linienspektrums und/oder der ersten Varianz und unter Berücksichtigung der zweiten Amplituden (A₂) des zweiten Linienspektrums und/oder der zweiten Varianz festzulegen, ob mindestens ein Radbefestigungsmittel (16) des jeweiligen Rads (10) sich löst.

2. Sensorvorrichtung (50) nach Anspruch 1, wobei die Auswerteelektronik (52) dazu ausgelegt ist, eine Differenz und/oder einen Quotienten mindestens einer der ersten Amplituden (A₁) des ersten Linienspektrums verglichen mit der entsprechenden zweiten Amplitude (A₂) des zweiten Linienspektrums zu bestimmen, und, sofern die bestimmte Differenz und/oder der bestimmte Quotient größer als eine für das jeweilige Rad (10) vorgegebene Vergleichsdifferenz und/oder als ein für das jeweilige Rad (10) vorgegebener Vergleichsquotient ist, festzulegen, dass das mindestens eine Radbefestigungsmittel (16) des jeweiligen Rads (10) sich löst.

3. Sensorvorrichtung (50) nach Anspruch 1 oder 2, wobei die Auswerteelektronik (52) dazu ausgelegt ist, während einer Fahrt des Kraftfahrzeugs mit einem aktuellen Lenkwinkel (α) über dem vorgegebenen Grenzlenkwinkel (α₀), wobei das jeweilige Rad (10) während des Überschreitens des vorgegebenen Grenzlenkwinkels (α₀) an einer Kurvenaußenseite des Kraftfahrzeugs liegt, eine Vielzahl von dritten Werten (ε₃) der Größe zu bestimmen und dritte Amplituden (A₃) eines dritten Linienspektrums der Vielzahl von dritten Werten (ε₃) und/oder eine dritte Varianz der Vielzahl von dritten Werten (ε₃) festzulegen, und unter Berücksichtigung zumindest der dritten Amplituden (A₃) des dritten Linienspektrums und/oder der dritten Varianz festzulegen, ob an mehreren Radbefestigungsmitteln (16) des jeweiligen Rads (10) ungleichmäßige Lösungsweiten vorliegen.

4. Sensorvorrichtung (50) nach einem der vorhergehenden Ansprüche, wobei die Auswerteelektronik (52) dazu ausgelegt ist, anhand eines von einem an einer Multipolscheibe (54) des jeweiligen Rads (10) angeordneten Drehzahlsensor (56) bereitgestellten Sensorsignals bezüglich einer innerhalb eines Messvolumens des Drehzahlsensors zeitlich-variierenden Magnetfeldstärke Zeitintervalle, innerhalb welcher jeweils einer der Polbereich (58) der Multipolscheibe (54) das Messvolumen des Drehzahlsensors (56) durchläuft, zu bestimmen, einen Mittelwert über alle Zeitintervalle aller Polbereiche (58) der Multipolscheibe (54) festzulegen, und die Vielzahl von ersten Werten (ε₁), Vielzahl von zweiten Werten (ε₂) oder Vielzahl von dritten Werten (ε₃) als Quotienten der bestimmten Zeitintervalle geteilt durch den Mittelwert festzulegen.

5. Sensorvorrichtung (50) nach einem der vorhergehenden Ansprüche, wobei die Auswerteelektronik (52) dazu ausgelegt ist, die ersten Amplituden (A₁) des ersten Linienspektrums, die zweiten Amplituden (A₂) des zweiten Linienspektrums und/oder die dritten Amplituden (A₃) des dritten Linienspektrums mittels einer Fourier-Transformation und/oder einer Filterung festzulegen.

6. Verfahren zum Untersuchen eines Befestigungszustands zumindest eines Rads (10) eines Kraftfahrzeugs mit den Schritten:
Bestimmen einer Vielzahl von ersten Werten (ε₁) einer Größe, welche eine durch Vibration einer Felge (12) des jeweiligen Rads (10) in Bezug zu einer Radnabe (14) des jeweiligen Rads (10) ausgelöste Modulation einer Raddrehzahl (ω) des jeweiligen Rads (10) wiedergibt, während einer Fahrt des Kraftfahrzeugs mit einem aktuellen Lenkwinkel (α) unter einem vorgegebenen Grenzlenkwinkel (α₀) und mit einem Betrag (|a|) einer aktuellen Beschleunigung des Kraftfahrzeugs unter einem vorgegebenen Grenzbetrag (|a₀|) (S1);
Festlegen von ersten Amplituden (A₁) eines ersten Linienspektrums der Vielzahl von ersten Werten (ε₁) und/oder einer ersten Varianz der Vielzahl von ersten Werten (ε₁)(S2);
Bestimmen einer Vielzahl von zweiten Werten (ε₂) der Größe während einer Fahrt des Kraftfahrzeugs mit einem aktuellen Lenkwinkel (α) über dem vorgegebenen Grenzlenkwinkel (α₀), wobei das jeweilige Rad während eines Überschreitens des vorgegebenen Grenzlenkwinkels (α₀) an einer Kurveninnenseite des Kraftfahrzeugs liegt, und/oder mit einem Betrag (|a|) einer aktuellen Beschleunigung des Kraftfahrzeugs über dem vorgegebenen Grenzbetrag (|a₀|)(S3);
Festlegen von zweiten Amplituden (A₂) eines zweiten Linienspektrums der Vielzahl von zweiten Werten (ε₂) und/oder einer zweiten Varianz der Vielzahl von zweiten Werten (ε₂)(S4); und
Festlegen, ob mindestens ein Radbefestigungsmittel (16) des jeweiligen Rads (10) sich löst, unter Berücksichtigung der ersten Amplituden (A₁) des ersten Linienspektrums und/oder der ersten Varianz und unter Berücksichtigung der zweiten Amplituden (A₂) des zweiten Linienspektrums und/oder der zweiten Varianz (S5).

7. Verfahren nach Anspruch 6, wobei eine Differenz und/oder ein Quotient mindestens einer der ersten Amplituden (A₁) des ersten Linienspektrums verglichen mit der entsprechenden zweiten Amplitude (A₂) des zweiten Linienspektrums bestimmt werden, und, sofern die bestimmte Differenz und/oder der bestimmte Quotient größer als eine für das jeweilige Rad (10) vorgegebene Vergleichsdifferenz und/oder als ein für das jeweilige Rad (10) vorgegebener Vergleichsquotient ist, festgelegt wird, dass das mindestens eine Radbefestigungsmittel (16) des jeweiligen Rads (10) sich löst.

8. Verfahren nach Anspruch 6 oder 7 mit den zusätzlichen Schritten:
Bestimmen einer Vielzahl von dritten Werten (ε₃) der Größe während einer Fahrt des Kraftfahrzeugs mit einem aktuellen Lenkwinkel (α) über dem vorgegebenen Grenzlenkwinkel (α₀), wobei das jeweilige Rad (10) während eines Überschreitens des vorgegebenen Grenzlenkwinkels (α₀) an einer Kurvenaußenseite des Kraftfahrzeugs liegt (S7);
Festlegen von dritten Amplituden (A₃) eines dritten Linienspektrums der Vielzahl von dritten Werten (ε₃) und/oder einer dritten Varianz der Vielzahl von dritten Werten (ε₃)(S8); und
Festlegen, ob an mehreren Radbefestigungsmitteln (16) des jeweiligen Rads (10) ungleichmäßige Lösungsweiten vorliegen, unter Berücksichtigung zumindest der dritten Amplituden (A₃) des dritten Linienspektrums und/oder der dritten Varianz (S9).

9. Verfahren nach einem der Ansprüche 6 bis 8, wobei zum Bestimmen der Vielzahl von ersten Werten (ε₁), Vielzahl von zweiten Werten (ε₂) und/oder Vielzahl von dritten Werten (ε₃) der Größe, welche die durch Vibration der Felge (12) des jeweiligen Rads (10) in Bezug zu der Radnabe (14) des jeweiligen Rads (10) ausgelöste Modulation der Raddrehzahl (ω) des jeweiligen Rads (10) wiedergibt, die folgenden Teilschritte ausgeführt werden:
Einsetzen eines an einer Multipolscheibe (54) des jeweiligen Rads (10) angeordneten Drehzahlsensors (56) zum Messen einer innerhalb eines Messvolumens des Drehzahlsensors (56) zeitlich-variierenden Magnetfeldstärke;
Bestimmen von Zeitintervallen, innerhalb welcher jeweils einer der Polbereich (58) der Multipolscheibe (54) das Messvolumen des Drehzahlsensors (56) durchläuft, anhand der gemessenen zeitlich-variierenden Magnetfeldstärke;
Festlegen eines Mittelwerts über alle Zeitintervalle aller Polbereiche (58) der Multipolscheibe (54); und
Festlegen der Vielzahl von ersten Werten (ε₁), Vielzahl von zweiten Werten (ε₂) oder Vielzahl von dritten Werten (ε₃) als Quotienten der bestimmten Zeitintervalle geteilt durch den Mittelwert.

10. Verfahren nach einem der Ansprüche 6 bis 9, wobei die ersten Amplituden (A₁) des ersten Linienspektrums, die zweiten Amplituden (A₂) des zweiten Linienspektrums und/oder die dritten Amplituden (A₃) des dritten Linienspektrums mittels einer Fourier-Transformation und/oder mittels einer Filterung festgelegt werden.

## Claims

1. Sensor device (50) for a motor vehicle, having:
evaluation electronics (52) which are designed, for at least one wheel (10) of the motor vehicle:
- during a journey of the motor vehicle with a current steering angle (α) below a predefined limit steering angle (α₀) and with an absolute value (|a|) of a current acceleration of the motor vehicle below a predefined limit absolute value (|a₀|), to determine a multiplicity of first values (ε₁) of a variable representing modulation of a wheel speed (ω) of the respective wheel (10) that is triggered by vibration of a rim (12) of the respective wheel (10) in relation to a wheel hub (14) of the respective wheel (10), and to determine first amplitudes (A₁) of a first line spectrum of the multiplicity of first values (ε₁) and/or a first variance of the multiplicity of first values (ε₁);
- during a journey of the motor vehicle with a current steering angle (α) above the predefined limit steering angle (α₀), wherein the respective wheel (10) is on the inside of a bend of the motor vehicle while the predefined limit steering angle (α₀) is exceeded, and/or with an absolute value (|a|) of a current acceleration of the motor vehicle above the predefined limit absolute value (|a₀|), to determine a multiplicity of second values (ε₂) of the variable, and to determine second amplitudes (A₂) of a second line spectrum of the multiplicity of second values (ε₂) and/or a second variance of the multiplicity of second values (ε₂); and
- to determine, taking into account the first amplitudes (A₁) of the first line spectrum and/or the first variance and taking into account the second amplitudes (A₂) of the second line spectrum and/or the second variance, whether at least one wheel fastening means (16) of the respective wheel (10) has come loose.

2. Sensor device (50) according to Claim 1, wherein the evaluation electronics (52) are designed to determine a difference and/or a quotient of at least one of the first amplitudes (A₁) of the first line spectrum compared with the corresponding second amplitude (A₂) of the second line spectrum, and, if the determined difference and/or the determined quotient is/are greater than a comparison difference predefined for the respective wheel (10) and/or greater than a comparison quotient predefined for the respective wheel (10), to determine that the at least one wheel fastening means (16) of the respective wheel (10) has come loose.

3. Sensor device (50) according to Claim 1 or 2, wherein the evaluation electronics (52) are designed, during a journey of the motor vehicle with a current steering angle (α) above the predefined limit steering angle (α₀), wherein the respective wheel (10) is on the outside of a bend of the motor vehicle while the predefined limit steering angle (α₀) is exceeded, to determine a multiplicity of third values (ε₃) of the variable, and to determine third amplitudes (A₃) of a third line spectrum of the multiplicity of third values (ε₃) and/or a third variance of the multiplicity of third values (ε₃), and to determine, taking into account at least the third amplitudes (A₃) of the third line spectrum and/or the third variance, whether there are uneven loosening widths at a plurality of wheel fastening means (16) of the respective wheel (10).

4. Sensor device (50) according to one of the preceding claims, wherein the evaluation electronics (52) are designed, on the basis of a sensor signal provided by a speed sensor (56) arranged on a multi-pole disc (54) of the respective wheel (10) and relating to a time-varying magnetic field strength within a measurement volume of the speed sensor, to determine intervals of time within which one of the pole regions (58) of the multi-pole disc (54) respectively passes through the measurement volume of the speed sensor (56), to determine a mean value over all intervals of time of all pole regions (58) of the multi-pole disc (54), and to determine the multiplicity of first values (ε₁), the multiplicity of second values (ε₂) or the multiplicity of third values (ε₃) as quotients of the determined intervals of time divided by the mean value.

5. Sensor device (50) according to one of the preceding claims, wherein the evaluation electronics (52) are designed to determine the first amplitudes (A₁) of the first line spectrum, the second amplitudes (A₂) of the second line spectrum and/or the third amplitudes (A₃) of the third line spectrum by means of a Fourier transform and/or filtering.

6. Method for examining a fastening state of at least one wheel (10) of a motor vehicle, having the steps of:
determining a multiplicity of first values (ε₁) of a variable representing modulation of a wheel speed (ω) of the respective wheel (10) that is triggered by vibration of a rim (12) of the respective wheel (10) in relation to a wheel hub (14) of the respective wheel (10) during a journey of the motor vehicle with a current steering angle (α) below a predefined limit steering angle (α₀) and with an absolute value (|a|) of a current acceleration of the motor vehicle below a predefined limit absolute value (|a₀|) (S1);
determining first amplitudes (A₁) of a first line spectrum of the multiplicity of first values (ε₁) and/or a first variance of the multiplicity of first values (ε₁) (S2);
determining a multiplicity of second values (ε₂) of the variable during a journey of the motor vehicle with a current steering angle (α) above the predefined limit steering angle (α₀), wherein the respective wheel is on the inside of a bend of the motor vehicle while the predefined limit steering angle (α₀) is exceeded, and/or with an absolute value (|a|) of a current acceleration of the motor vehicle above the predefined limit absolute value (|a₀|) (S3) ;
determining second amplitudes (A₂) of a second line spectrum of the multiplicity of second values (ε₂) and/or a second variance of the multiplicity of second values (ε₂) (S4); and
determining whether at least one wheel fastening means (16) of the respective wheel (10) has come loose, taking into account the first amplitudes (A₁) of the first line spectrum and/or the first variance and taking into account the second amplitudes (A₂) of the second line spectrum and/or the second variance (S5).

7. Method according to Claim 6, wherein a difference and/or a quotient of at least one of the first amplitudes (A₁) of the first line spectrum compared with the corresponding second amplitude (A₂) of the second line spectrum is/are determined, and, if the determined difference and/or the determined quotient is/are greater than a comparison difference predefined for the respective wheel (10) and/or greater than a comparison quotient predefined for the respective wheel (10), it is determined that the at least one wheel fastening means (16) of the respective wheel (10) has come loose.

8. Method according to Claim 6 or 7, comprising the additional steps of:
determining a multiplicity of third values (ε₃) of the variable during a journey of the motor vehicle with a current steering angle (α) above the predefined limit steering angle (α₀), wherein the respective wheel (10) is on the outside of a bend of the motor vehicle while the predefined limit steering angle (α₀) is exceeded (S7);
determining third amplitudes (A₃) of a third line spectrum of the multiplicity of third values (ε₃) and/or a third variance of the multiplicity of third values (ε₃) (S8); and
determining whether there are uneven loosening widths at a plurality of wheel fastening means (16) of the respective wheel (10), taking into account at least the third amplitudes (A₃) of the third line spectrum and/or the third variance (S9).

9. Method according to one of Claims 6 to 8, wherein, in order to determine the multiplicity of first values (ε₁), the multiplicity of second values (ε₂) and/or the multiplicity of third values (ε₃) of the variable representing the modulation of the wheel speed (ω) of the respective wheel (10) that is triggered by vibration of the rim (12) of the respective wheel (10) in relation to the wheel hub (14) of the respective wheel (10), the following substeps are carried out:
using a speed sensor (56) arranged on a multi-pole disc (54) of the respective wheel (10) to measure a time-varying magnetic field strength inside a measurement volume of the speed sensor (56);
determining intervals of time within which one of the pole regions (58) of the multi-pole disc (54) respectively passes through the measurement volume of the speed sensor (56) on the basis of the measured time-varying magnetic field strength;
determining a mean value over all intervals of time of all pole regions (58) of the multi-pole disc (54); and
determining the multiplicity of first values (ε₁), the multiplicity of second values (ε₂) or the multiplicity of third values (ε₃) as quotients of the determined intervals of time divided by the mean value.

10. Method according to one of Claims 6 to 9, wherein the first amplitudes (A₁) of the first line spectrum, the second amplitudes (A₂) of the second line spectrum and/or the third amplitudes (A₃) of the third line spectrum are determined by means of a Fourier transform and/or by means of filtering.

## Revendications

1. Dispositif capteur (50) pour un véhicule automobile, comprenant :
une électronique d'évaluation (52), laquelle est conçue pour, pour au moins une roue (10) du véhicule automobile :
- pendant un déplacement du véhicule automobile avec un angle de braquage actuel (α) inférieur à un angle de braquage limite (α₀) prédéfini et avec une valeur (|a|) d'une accélération actuelle du véhicule automobile inférieure à une valeur limite (|a₀|) prédéfinie, déterminer une pluralité de premières valeurs (ε₁) d'une grandeur, laquelle restitue une modulation d'une vitesse de rotation de roue (ω) de la roue (10) respective déclenchée par la vibration d'une jante (12) de la roue (10) respective par rapport à un moyeu de roue (14) de la roue (10) respective, et établir des premières amplitudes (A₁) d'un premier spectre de lignes de la pluralité de premières valeurs (ε₁) et/ou une première variance de la pluralité de premières valeurs (ε₁) ;
- pendant un déplacement du véhicule automobile avec un angle de braquage (α) actuel supérieur à l'angle de braquage limite (α₀) prédéfini, la roue (10) respective se trouvant sur un côté intérieur du virage du véhicule automobile pendant un dépassement de l'angle de braquage limite (α₀) prédéfini, et/ou avec une valeur (|a|) d'une accélération actuelle du véhicule automobile supérieure à la valeur limite (|a₀|) prédéfinie, déterminer une pluralité de deuxièmes valeurs (ε₂) de la grandeur et établir des deuxièmes amplitudes (A₂) d'un deuxième spectre de lignes de la pluralité de deuxièmes valeurs (ε₂) et/ou une deuxième variance de la pluralité de deuxièmes valeurs (ε₂) ; et
- en tenant compte des premières amplitudes (A₁) du premier spectre de lignes et/ou de la première variance et en tenant compte des deuxièmes amplitudes (A₂) du deuxième spectre de lignes et/ou de la deuxième variance, établir si au moins un moyen de fixation de roue (16) de la roue respective (10) se détache.

2. Dispositif capteur (50) selon la revendication 1, l'électronique d'évaluation (52) étant conçue pour déterminer une différence et/ou un quotient d'au moins l'une des premières amplitudes (A₁) du premier spectre de lignes comparé à la deuxième amplitude (A₂) correspondante du deuxième spectre de lignes et, dans la mesure où la différence déterminée et/ou le quotient déterminé sont supérieurs à une différence de comparaison prédéfinie pour la roue (10) respective et/ou à un quotient de comparaison prédéfini pour la roue (10) respective, établir que l'au moins un moyen de fixation de roue (16) de la roue (10) respective se détache.

3. Dispositif capteur (50) selon la revendication 1 ou 2, l'électronique d'évaluation (52) étant conçue pour, pendant un déplacement du véhicule automobile avec un angle de braquage (α) actuel supérieur à l'angle de braquage limite (α₀) prédéfini, la roue (10) respective se trouvant sur un côté extérieur au virage du véhicule automobile pendant le dépassement de l'angle de braquage limite (α₀) prédéfini, déterminer une pluralité de troisièmes valeurs (ε₃) de la grandeur et établir des troisièmes amplitudes (A₃) d'un troisième spectre de lignes de la pluralité de troisièmes valeurs (ε₃) et/ou une troisième variance de la pluralité de troisièmes valeurs (ε₃) et, en tenant compte au moins des troisièmes amplitudes (A₃) du troisième spectre de lignes et/ou de la troisième variance, établir s'il existe des étendues de détachement inégales sur plusieurs moyens de fixation de roue (16) de la roue (10) respective.

4. Dispositif capteur (50) selon l'une des revendications précédentes, l'électronique d'évaluation (52) étant conçue pour, à l'aide d'un signal de capteur mis à disposition par un capteur de vitesse de rotation (56) disposé sur un disque multipolaire (54) de la roue (10) respective, en ce qui concerne une intensité de champ magnétique variant dans le temps à l'intérieur d'un volume de mesure du capteur de vitesse de rotation, déterminer des intervalles de temps à l'intérieur desquels l'une des zones polaires (58) du disque multipolaire (54) traverse respectivement le volume de mesure du capteur de vitesse de rotation (56), établir une valeur moyenne sur tous les intervalles de temps de toutes les zones polaires (58) du disque multipolaire (54), et établir la pluralité de premières valeurs (ε₁), la pluralité de deuxièmes valeurs (ε₂) ou la pluralité de troisièmes valeurs (ε₃) en tant que quotients des intervalles de temps déterminés divisés par la valeur moyenne.

5. Dispositif capteur (50) selon l'une des revendications précédentes, l'électronique d'évaluation (52) étant conçue pour établir les premières amplitudes (A₁) du premier spectre de lignes, les deuxièmes amplitudes (A₂) du deuxième spectre de lignes et/ou les troisièmes amplitudes (A₃) du troisième spectre de lignes au moyen d'une transformée de Fourier et/ou d'un filtrage.

6. Procédé d'examen de l'état de fixation d'au moins une roue (10) d'un véhicule automobile, comprenant les étapes de :
détermination d'une pluralité de premières valeurs (ε₁) d'une grandeur, laquelle restitue une modulation d'une vitesse de rotation de roue (ω) de la roue (10) respective déclenchée par une vibration d'une jante (12) de la roue (10) respective par rapport à un moyeu de roue (14) de la roue (10) respective, pendant un déplacement du véhicule automobile avec un angle de braquage actuel (α) inférieur à un angle de braquage limite (α₀) prédéfini et avec une valeur (|a|) d'une accélération actuelle du véhicule automobile inférieure à une valeur limite (|a₀|) prédéfinie (S1) ;
établissement de premières amplitudes (A₁) d'un premier spectre de lignes de la pluralité de premières valeurs (ε₁) et/ou d'une première variance de la pluralité de premières valeurs (ε₁) (S2) ;
détermination d'une pluralité de deuxièmes valeurs (ε₂) de la grandeur pendant un déplacement du véhicule automobile avec un angle de braquage (α) actuel supérieur à l'angle de braquage limite (α₀) prédéfini, la roue respective se trouvant sur un côté intérieur de virage du véhicule automobile pendant un dépassement de l'angle de braquage limite (α₀) prédéfini, et/ou avec une valeur (|a|) d'une accélération actuelle du véhicule automobile supérieure à la valeur limite (|a₀|) prédéfinie (S3) ;
établissement de deuxièmes amplitudes (A₂) d'un deuxième spectre de lignes de la pluralité de deuxièmes valeurs (ε₂) et/ou d'une deuxième variance de la pluralité de deuxièmes valeurs (ε₂) (S4) ;
établissement si au moins un moyen de fixation de roue (16) de la roue (10) respective se détache, en tenant compte des premières amplitudes (A₁) du premier spectre de lignes et/ou de la première variance et en tenant compte des deuxièmes amplitudes (A₂) du deuxième spectre de lignes et/ou de la deuxième variance (S5).

7. Procédé selon la revendication 6, une différence et/ou un quotient d'au moins l'une des premières amplitudes (A₁) du premier spectre de lignes comparé à la deuxième amplitude (A₂) correspondante du deuxième spectre de lignes étant déterminés et, dans la mesure où la différence déterminée et/ou le quotient déterminé sont supérieurs à une différence de comparaison prédéfinie pour la roue (10) respective et/ou à un quotient de comparaison prédéfini pour la roue (10) respective, l'établissement ayant lieu du fait que l'au moins un moyen de fixation de roue (16) de la roue (10) respective se détache.

8. Procédé selon la revendication 6 ou 7, comprenant les étapes supplémentaires de :
détermination d'une pluralité de troisièmes valeurs (ε₃) de la grandeur pendant un déplacement du véhicule automobile avec un angle de braquage (α) actuel supérieur à l'angle de braquage limite (α₀) prédéfini, la roue (10) respective se trouvant sur un côté extérieur de virage du véhicule automobile pendant un dépassement de l'angle de braquage limite (α₀) prédéfinie (S7) ;
établissement de troisièmes amplitudes (A₃) d'un troisième spectre de lignes de la pluralité de troisièmes valeurs (ε₃) et/ou d'une troisième variance de la pluralité de troisièmes valeurs (ε₃) (S8) ;
établissement s'il existe des étendues de détachement inégales sur plusieurs moyens de fixation de roue (16) de la roue (10) respective, en tenant compte au moins des troisièmes amplitudes (A₃) du troisième spectre de lignes et/ou de la troisième variance (S9).

9. Procédé selon l'une des revendications 6 à 8, les étapes partielles suivantes étant exécutées en vue de déterminer la pluralité de premières valeurs (ε₁), la pluralité de deuxièmes valeurs (ε₂) et/ou la pluralité de troisièmes valeurs (ε₃) de la grandeur, laquelle restitue la modulation de la vitesse de rotation (ω) de la roue (10) respective déclenchée par la vibration de la jante (12) de la roue (10) respective par rapport au moyeu (14) de la roue (10) respective :
insertion d'un capteur de vitesse de rotation (56) disposé sur un disque multipolaire (54) de la roue (10) respective pour mesurer une intensité de champ magnétique variant dans le temps à l'intérieur d'un volume de mesure du capteur de vitesse de rotation (56) ;
détermination d'intervalles de temps à l'intérieur desquels l'une des zones polaires (58) du disque multipolaire (54) traverse respectivement le volume de mesure du capteur de vitesse de rotation (56), à l'aide de l'intensité de champ magnétique variant dans le temps mesurée ;
établissement d'une valeur moyenne sur tous les intervalles de temps de toutes les zones polaires (58) du disque multipolaire (54) ; et
établissement de la pluralité de premières valeurs (ε₁), de la pluralité de deuxièmes valeurs (ε₂) ou la pluralité de troisièmes valeurs (ε₃) en tant que quotients des intervalles de temps déterminés divisés par la valeur moyenne.

10. Procédé selon l'une des revendications 6 à 9, les premières amplitudes (A₁) du premier spectre de lignes, les deuxièmes amplitudes (A₂) du deuxième spectre de lignes et/ou les troisièmes amplitudes (A₃) du troisième spectre de lignes étant établies au moyen d'une transformée de Fourier et/ou au moyen d'un filtrage.
